# EUROPÄISCHE PATENTSCHRIFT

(11) **EP 3 756 442 B1**
(45) Veröffentlichungstag und Bekanntmachung des Hinweises auf die Patenterteilung: **22.06.2022**
(21) Anmeldenummer: 20177537.6
(22) Anmeldetag: 29.05.2020
(51) Int. Cl.: A01D 43/08, A01F 29/06, A01F 29/09, B02C 18/18

(54) **GEGENSCHNEIDE**
SHEARBAR
CONTRE-LAME

(30) Priorität: 24.06.2019 DE 102019116945
(43) Veröffentlichungstag der Anmeldung: 30.12.2020
(73) Patentinhaber: Betek GmbH & Co. KG, 78733 Aichhalden (DE)
(72) Erfinder: ESSIG, Wolfgang, 72348 Rosenfeld (DE); SCHNEIDER, Uwe, 78628 Rottweil (DE); SEIFRIED, Fabian, 78662 Herrenzimmern (DE); ROMING, Julian, 78713 Schramberg (DE)
(74) Vertreter: Herrmann, Jochen

(56) Entgegenhaltungen:
- EP-A1- 0 022 053
- EP-A1- 0 761 089
- EP-A1- 2 842 413
- DE-A1-102014 106 037
- DE-A1-102014 108 607

## Beschreibung

Die Erfindung betrifft eine Gegenschneide, insbesondere für einen Feldhäcksler oder eine sonstige land- oder forstwirtschaftliche Maschine, mit einem Träger der einen Schneidbereich aufweist, wobei im Schneidbereich eine Vielzahl von Schneidelementen, aneinandergereiht sind, wobei die Schneidelemente eine Teil-Schneide aufweisen und zumindest ein Teil der Teil-Schneiden eine Schneidkante bilden, die ausgebildet ist, um mit einer Messerleiste einen Schneideingriff für das zu zerkleinernde Material zu bilden, wobei die Schneidkante einen Übergang zwischen einer von den Schneidelementen gebildeten und sich quer zur Schneidrichtung erstreckenden Schneidfläche und einer sich im Wesentlichen in Schneidrichtung erstreckenden, an die Schneidkante mittelbar oder unmittelbar anschließenden Freifläche bildet,

Aus der EP 2 842 413 A1 ist Feldhäcksler bekannt, der ein Schneidaggregat mit einer Häckseltrommel aufweist. Auf der Häckseltrommel sind Messerleisten befestigt. Dabei sind die Messerleisten auf dem Umfang der Häckseltrommel so festgemacht, dass sie sich in Richtung der Drehachse der Häckseltrommel erstrecken. Mit der Häckseltrommel arbeitet eine ortsfeste Gegenschneide zusammen. Die Messerleisten und die Gegenschneide bilden einen gemeinsamen Schneidbereich. In diesem kann Erntegut zerkleinert werden. Hierzu wird das Erntegut über eine Erntegutaufnahmevorrichtung des Häckslers zunächst aufgenommen und im Bereich von Einzugswalzen komprimiert. Die Einzugwalzen sind in Förderrichtung unmittelbar vor der Gegenschneide angeordnet.

Um eine gute Schneidleistung zu erreichen, ist es erforderlich den Schneidspalt zwischen der Gegenschneide und den Messerleisten so klein wie möglich einstellen zu können. Dabei ist allerdings darauf zu achten, dass ein Aufsetzen der Messerleisten auf den Gegenschneiden verhindert ist. Bei einem solchen Kontakt besteht die Gefahr, dass die aus einem sprödbrüchigen Hartwerkstoff (beispielsweise Hartmetall oder Keramik) bestehenden Schneidelemente beschädigt werden. Bei einer so beschädigten Gegenschneide sinkt die Schneidleistung erheblich und ein vorzeitiger Austausch ist erforderlich, um die gewünschte Schneidleistung aufrechtzuerhalten. Die Einstellung der Gegenschneide erfordert Know-how und eine präzise arbeitende Einstellvorrichtung. Es ist nicht immer auszuschließen, dass der Schneidspalt nicht exakt eingestellt wird oder sich im Laufe der Betriebszeit die Gegenschneide ungewollt verstellt.

Aus DE 10 2014 106 037 A1 ist eine Gegenschneide bekannt, die zum Einsatz in einem Feldhäcksler oder einem Holzhacker bestimmt ist. Die Gegenschneide weist einen Tragkörper auf der an gegenüberliegenden Seiten mit Schneideelementen bestückt ist. Die Schneidelemente weisen jeweils eine Teil-Schneide auf. Die Teil-Schneiden bilden eine gemeinsame Schneidkante. Wenn eine Schneidkante verschlissen ist, so kann die Gegenschneide in einer um 180° verdrehten Anordnung wieder angebaut werden, sodass die zweite Schneidkante zum Einsatz kommt.

Dokument DE 10 2014 108 607 A1 betrifft ebenso eine Gegenschneide, die in einem Holzhäcksler zur Herstellung von Holzschnitzel eingesetzt wird. Die Gegenschneide besteht aus einer Vielzahl an Hartstoffelementen und ist an einer Ausnehmung eines rechteckigen Grundkörpers, welcher beispielsweise aus einem vergüteten Stahl gefertigt ist, über eine Klebeverbindung verbunden. Der Einsatz einer Klebeverbindung gewährleistet eine festigkeitsoptimierte Gegenschneide mit einer verlängerten Standzeit. Die Ausnehmungen weisen Ansatzabschnitte auf, welche durch eine Rundung gekennzeichnet sind. Durch die Rundungen der Ansatzabschnitte können die Gegenschneiden exakt positioniert werden. Darüber hinaus wird durch das Vorsehen der Ansatzabschnitte Spannungen reduziert und somit die Bruchgefahr verringert.

In Dokument EP 0 022 053 A1 ist ein Scherleiste gezeigt, welche eine Schneidekante, geformt von Bearbeitungskerben, offenbart und zum Zerkleinern von Erntegut eingesetzt wird. Die Bearbeitungskerben können unterschiedliche Formen, vorzugsweise eine dreieckige oder eine halbkreisförmige Form, aufweisen, um die Länge der Schneidekante zu vergrößern und Querbewegungen des Ernteguts einzuschränken. Die Schneidekante der Schneideleiste ist aus Hartmaterial gefertigt und zerkleinert Erntegut mittels eines Zylinderschneidekopfs, an welchem rotierende Messer angeordnet sind. Die Messer sind zu der Schneidekante derart ausgerichtet, dass eine scherenförmige Schnittbewegung gewährleistet wird.

Aus EP 0 761 089 A1 ist ein Kontrastmesser für Futterzerkleinerungsmaschinen bekannt. Das Kontrastmesser setzt sich aus einem monolitischen Balken zusammen, welcher bei eingesetzten Schneideelementen und Sicherungseinsetzen einen im wesentlichen rechteckigen Querschnitt aufweist. Die Schneidelemente sind form- und passgenau zwischen dem monolitischen Balken und den Sicherungseinsetzen verklemmt, wobei die Sicherungseinsetzte über Schrauben auf dem monolitischen Balken befestigt sind.

Es ist Aufgabe der Erfindung, eine Gegenschneide der eingangs erwähnten Art bereitzustellen, bei der mit geringem Teile und Fertigungsaufwand ein Schneidenbruch auch dann zuverlässig verhindert ist, wenn der Schneidspalt nicht exakt eingehalten ist.

Diese Aufgabe wird dadurch gelöst, dass an oder in der Reihe von Schneidelementen ein Einlaufelement vorgesehen ist, das als Sinterteil, bestehend aus Hartwerkstoff mit im Sinterverfahren anprofilierter Einlauffase ausgebildet ist, wobei die Einlauffase in die Schneidkante mittelbar oder unmittelbar übergeleitet ist, und wobei die Einlauffase derart im Winkel zu der Schneidkante angeordnet ist, dass sie gegenüber der Freifläche und in Richtung der Schneidfläche zurückversetzt angeordnet ist.

Mit dem erfindungsgemäßen Einlaufelement ist verhindert, dass auch dann, wenn der Schneidspalt nicht exakt eingestellt ist, ein Schneidenbruch verhindert ist. Insbesondere kann die Messerleiste bei zu klein eingestelltem Schneidspalt an der zurückversetzt angeordneten Einlauffase des Einlaufelements auflaufen. In dieser Betriebsphase ist dann ein hartes Aufsetzen der Messerleiste auf der Gegenschneide bei fehlerhaft eingestelltem Schneidspalt ausgeschlossen. Die Messerleiste gleitet an der Einlauffase auf und kann elastisch in radialer Richtung ausgelenkt werden. Dies ist beispielsweise aufgrund der Eigenelastizität der Messerleiste oder durch eine elastische Auslenkvorrichtung möglich. Wenn die Messerleiste die Einlauffase passiert hat, so gelangt die Schneide der Messerleiste in den Bereich der Schneidkante der Gegenschneide, da die Einlauffase erfindungsgemäß in die Schneidkante übergeleitet ist.

Es stellt nun eine Besonderheit der Erfindung dar, dass das Einlaufelement, welches aus einem Hartwerkstoff, beispielsweise Keramik oder Hartmetall, besteht mit der im Sinterverfahren bereits anprofilierten Einlauffase versehen ist. Mit anderen Worten wird während des Fertigungsprozesses das Einlaufelement zunächst mit der Einlauffase als Grünling gepresst. Anschließend wird der Grünling im Sinterofen gebrannt. Das Einlaufelement ist dann unmittelbar verwendbar und kann mit der Gegenschneide verbaut, beispielsweise verlötet oder verklebt, werden. Auf diese Weise kann auf einen aufwändigen Schleifprozess, bei dem die Einlauffase geschliffen wird, verzichtet werden. Insbesondere ist dieser Schritt nicht nur kostenintensiv. Vielmehr würde in die bereits gefertigte Gegenschneide mittels des Schleifprozesses Wärmeenergie über das Einlaufelement in die Verbindungsstelle zwischen Einlaufelement und dem Tragkörper der Gegenschneide eingebracht. Hierdurch verändert sich das Gefüge des Verbindungsmaterials (Lötverbindung, Klebeverbindung etc.), wodurch die Festigkeit nachteilig beeinträchtigt werden kann.

Besonders bevorzugt ist es vorgesehen, dass die Tiefe der eingepressten Einlauffase senkrecht zur Freifläche des anschließenden Schneidelements im Bereich zwischen 0,5 und 1,8 mm beträgt. Bei einer solchen Tiefe wird den im Betrieb üblicherweise auftretenden Fehlstellungen, insbesondere während des Betriebseinsatzes auftretenden Veränderungen in der Stellung der Messerschneiden in optimierter Weise Rechnung getragen.

Gemäß einer bevorzugten Erfindungsvariante kann es vorgesehen sein, dass das Einlaufelement einen Schneidenabschnitt mit einer Einlaufelement-Schneidkante aufweist, und wobei diese Einlaufelement-Schneidkante in die von den Schneidelementen gebildete Schneidkante übergeht, insbesondere in Flucht zu dieser Schneidkante steht. Bei einer solchen Konstruktion kann die Einlauffase unmittelbar am Einlaufelement bereits in die dort gebildete Einlaufelement-Schneidkante übergeleitet werden. Dies ist bei dem gewählten Fertigungsverfahren im Sinterprozess einfach und mit hoher Maßhaltigkeit durchführbar. Die Messerleiste kann dementsprechend auf der Einlauffase auflaufen und in die Einlaufelement-Schneidkante überführt werden. Anschließend steht die Messerschneide in einer Position, in der sie die anschließende Schneidkante nicht mehr beschädigen kann.

Wenn vorgesehen ist, dass das Einlaufelement einen Deckabschnitt aufweist, welcher bündig in die von dem benachbarten Schneidelement gebildete Schneidfläche übergeht, dann wird ein absatzloser Übergang geschaffen, der eine gute und verschleißarme Überleitung der Messerleiste in den Bereich der Schneidkante ermöglicht.

Zu diesem Zweck kann es auch zusätzlich oder alternativ vorgesehen sein, dass das Einlaufelement eine frontseitige Einlaufelement-Freifläche aufweist, die bündig in die von dem benachbarten Schneidelement gebildete Freifläche übergeht.

Gemäß einer denkbaren Erfindungsvariante kann es vorgesehen sein, dass die Einlauffase des Einlaufelements an gegenüberliegenden Seiten von einer Kante und einem Übergangsabschnitt begrenzt ist, wobei die Kante in einen oberseitigen Deckabschnitt übergeht und der Übergangsabschnitt die Einlauffase in die Einlaufelement-Freifläche überleitet. Durch diese einfache Maßnahme wird die Einlauffase derart geneigt zu der Schneidkante angestellt, dass die auflaufende Messerschneide weder unmittelbar auf dem Deckabschnitt noch auf der Freifläche aufsetzen kann, wenn der Schneidspalt nicht exakt eingehalten ist.

Zu diesem Zweck kann es auch vorgesehen sein, dass das Einlaufelement eine sich in Richtung der Schneidkante erstreckende Mittellängsebene und eine senkrecht dazu stehende, sich ebenfalls in Richtung der Schneidkante erstreckende Mittelquerebene aufweist, dass die Einlauffase oder die Einlauffasen sowohl zu der Mittellängsebene als auch zu der Mittelquerebene im Winkel stehen oder dass die Einlauffase oder die Einlauffasen zu der Mittellängsebene im Winkel steht.

Gemäß einer denkbaren Erfindungsvariante kann es vorgesehen sein, dass das Einlaufelement an seinem einen längsseitigen Ende, im Übergangsbereich zu dem anschließenden Schneidelement eine Stoßstelle aufweist und an dem gegenüberliegenden längsseitigen Ende einen Endabschnitt aufweist, dass im Anschluss an die Einlauffase ein zweiter Überleitbereich im Bereich des Endabschnitts vorgesehen ist, der sich eben und im Winkel und/oder bogenförmig an die Einlauffase anschließt. Über die Stoßstelle kann das Einlaufelement vorzugsweise abstandsfrei an das anschließende Schneidelement der Reihe von Schneidelementen anschließen. Auf diese Weise ist der Übergangsbereich zwischen dem Einlaufelement und dem anschließenden Schneidelement vor abrasivem Angriff geschützt, was zu einer verlängerten Lebensdauer führt. Darüber hinaus kann die auf dem Einlaufelement auflaufende Messerschneide direkt und schonend in das Schneidelement übergeleitet werden. Weiterhin kann der zweite Überleitungsbereich, welcher am Endabschnitt vorgesehen ist zu diesem Zweck ebenfalls in geeigneter Weise ausgebildet sein.

Für das Einlaufelement ergibt sich dann ein einfacher und stabiler Aufbau, wenn vorgesehen ist, dass das Einlaufelement an seiner Oberseite von einem Deckabschnitt und seiner Unterseite von einem Boden begrenzt ist, wobei der Deckabschnitt vorzugsweise parallel zu dem Boden steht, dass das Einlaufelement frontseitig von der Einlaufelement-Freifläche begrenzt ist und dass die Einlaufelement-Freifläche an den Deckabschnitt und/oder den Boden anschließt.

Mit dem erfindungsgemäßen Einlaufelement können verschiedenartige Gegenschneiden konzipiert werden. Beispielsweise kann es vorgesehen sein, dass ein Einlaufelement an einem längsseitigen Ende der Reihe von Schneidelementen vorgesehen ist. Eine solche Bauweise bietet sich beispielsweise an, wenn die Messerschneiden der Häckseltrommel sich über die gesamte Schneidbreite der Häckseltrommel erstrecken, wobei die Messerschneiden im Winkel kleiner 90° zu der Umlaufrichtung (Schneidrichtung) der Fräswalze angestellt sind.

Bei einer Konstruktion, bei der auf der Häckseltrommel an den gegenüberliegenden längsseitigen Enden der Häckseltrommel umfangsseitig Messerschneiden aufgebracht sind, wobei diese Messerschneiden jeweils im Winkel kleiner 90° zur Umfangsrichtung verlaufen und die Messerschneiden der gegenüberliegenden Seiten zueinander im Winkel angestellt sind, kann es bevorzugter Weise vorgesehen sein, dass ein Einlaufelement an den beiden längsseitigen Enden der Reihe von Schneidelementen angeordnet ist. Die Messerschneiden an den jeweils gegenüberliegenden Enden der Häckseltrommel können dann auf dem ihm zugeordneten Einlaufelement auflaufen.

Denkbar ist auch eine Konstruktion bei der die Gegenschneide derart gestaltet ist, dass wenigstens ein Einlaufelement in die Reihe von Schneidelementen zwischen zwei benachbarten Schneidelementen integriert ist. Diese Bauweise eignet sich dann, wenn beispielsweise zusätzlich zu umfangsseitig verlaufenden Reihen von Messerschneiden, welche an den beiden gegenüberliegenden Enden der Häckseltrommel vorgesehen sind, auch noch mittig auf der Häckseltrommel zwischen den beiden Enden zusätzlich umfangsseitig eine oder mehrere Reihen von Schneidelementen verwendet sind.

Weiterhin ist auch eine solche Verwendung bei einer Häckseltrommel denkbar, bei der zwei Reihen von Messerschneiden in Umfangsrichtung verlaufen, wobei diese Messerschneiden der Reihen sich in einem Mittenbereich der Häckseltrommel treffen und zueinander V-förmig angestellt sind,

Bei solchen Häckseltrommeln kann das Einlaufelement vorzugsweise zwei Einlauffasen aufweisen, die zueinander und zu der Schneidkante im Winkel stehen, und dass die Einlauffasen unmittelbar oder über einen Verbindungsabschnitt ineinander übergehen. Die beiden Reihen von Messerschneiden können auf das gemeinsame Einlaufelement auflaufen, wobei die Messerschneiden der einen Reihe auf die erste Einlauffase und die Messerschneiden der zweiten Reihe auf die zweite Einlauffase auflaufen. Hierdurch kann der Teileaufwand weiter verringert werden. Selbstverständlich ist es auch bei solchen Häckseltrommeln denkbar, dass für jede Reihe von Messerschneiden ein Einlaufelement in die Reihe von Schneidelementen integriert ist. Die beiden Einlaufelemente können dann beispielsweise unmittelbar aneinander gesetzt oder zueinander beabstandet sein. Insbesondere können die beiden Einlaufelemente spiegelsymmetrisch aufgebaut sein.

Zum Zwecke einer stabilen und einfach gestalteten Bauweise des Einlaufelements kann es dabei zudem vorgesehen sein, dass der Verbindungsabschnitt mit einer Verbindungskante im Bereich des Deckabschnitts abschließt, wobei die Verbindungskante einen Übergang zwischen dem Verbindungsabschnitt und dem Deckabschnitt bildet. In Weiterbildung der Erfindung kann der Verbindungsabschnitt einen ebenen Flächenabschnitt oder einen konkav gewölbten Flächenabschnitt zwischen den beiden Einlauffasen aufweisen. Bei einer konkaven Wölbung kann der Verbindungsabschnitt eine harmonische Überleitung in die beiden Einlauffasen bieten. Dadurch wird auch eine spannungsoptimierte Bauweise möglich.

Wenn vorgesehen ist, dass der Träger auf gegenüberliegenden Seiten Reihen von Schneidelementen aufweist, die jeweils eine Schneidkante bilden und dass jede der Reihen von Schneidelementen wenigstens ein Einlaufelement aufweist, dann kann die Gegenschneide so verbaut werden, dass wahlweise eine der beiden Schneidkanten mit der Häckseltrommel in Schneideingriff kommt. Insbesondere kann die Gegenschneide dann, wenn eine Schneidkante verschlissen ist, einfach gedreht und die zweite Schneidkante in Schneideingriff gebracht werden. Hierdurch ergeben sich eine Standzeitverlängerung und eine Verringerung des Teileaufwands, da nur ein Träger für zwei Schneidkanten Verwendung finden muss.

Um auch den an die Schneidelemente anschließenden Bereich des Trägers effektiv vor Verschleiß schützen zu können, kann es vorgesehen sein, dass sich an die Reihe von Schneidelementen im Bereich der Oberseite des Trägers eine Reihe von Panzerelementen anschließt, die vorzugsweise von plattenförmigen Elementen aus Hartstoff, insbesondere Hartmetall gebildet sind.

Die Erfindung wird im Folgenden anhand von in den Zeichnungen dargestellten Ausführungsbeispielen näher erläutert. Es zeigen:
Figur 1 und 2 in verschiedenen perspektivischen Darstellungen eine Häckseltrommel,
Figuren 3 und 4 Details, die den Figuren 1 und 2 entnommen sind, in vergrößerter Darstellung,
Figur 5 eine Gegenschneide in perspektivischer Darstellung,
Figur 6 ein der Figur 5 entnommenes und darin mit VI markiertes Detail
Figur 7 die Gegenschneide gemäß Figur 6 in einer veränderten Perspektive,
Figuren 8 bis 11 ein Einlaufelement für die Gegenschneide gemäß den Figuren 5 bis 7 in verschiedenen Darstellungen,
Figuren 12 bis 15 ein zweites Ausführungsbeispiel eines Einlaufelements für die Gegenschneide gemäß den Figuren 5 bis 7 in verschiedenen Darstellungen,
Figuren 16 ein drittes Ausführungsbeispiel eines Einlaufelements für die Gegenschneide gemäß den Figuren 5 bis 7 in verschiedenen Darstellungen,
Figuren 17 ein viertes Ausführungsbeispiel eines Einlaufelements für die Gegenschneide gemäß den Figuren 5 bis 7 in verschiedenen Darstellungen,
Figur 18 ein weiteres Ausführungsbeispiel für eine Gegenschneide in perspektivischer Darstellung,
Figur 19 ein der Figur 18 entnommenes und in dieser Darstellung mit XIX markiertes Detail,
Figur 20 ein der Figur 18 entnommenes und in dieser Darstellung mit XX markiertes Detail,
Figur 21 die Gegenschneide gemäß Figur 18 in einer veränderten Perspektive,
Figuren 22 bis 25 ein Einlaufelement für die Gegenschneide gemäß den Figuren 18 bis 21 in verschiedenen Darstellungen,
Figur 26 in perspektivischer Darstellung eine zweite Variante eines Einlaufelements für die Gegenschneide gemäß Figur 18,
Figur 27 in perspektivischer Darstellung eine dritte Variante eines Einlaufelements für die Gegenschneide gemäß Figur 18 und
Figur 28 in perspektivischer Darstellung eine vierte Variante eines Einlaufelements für die Gegenschneide gemäß Figur 18.

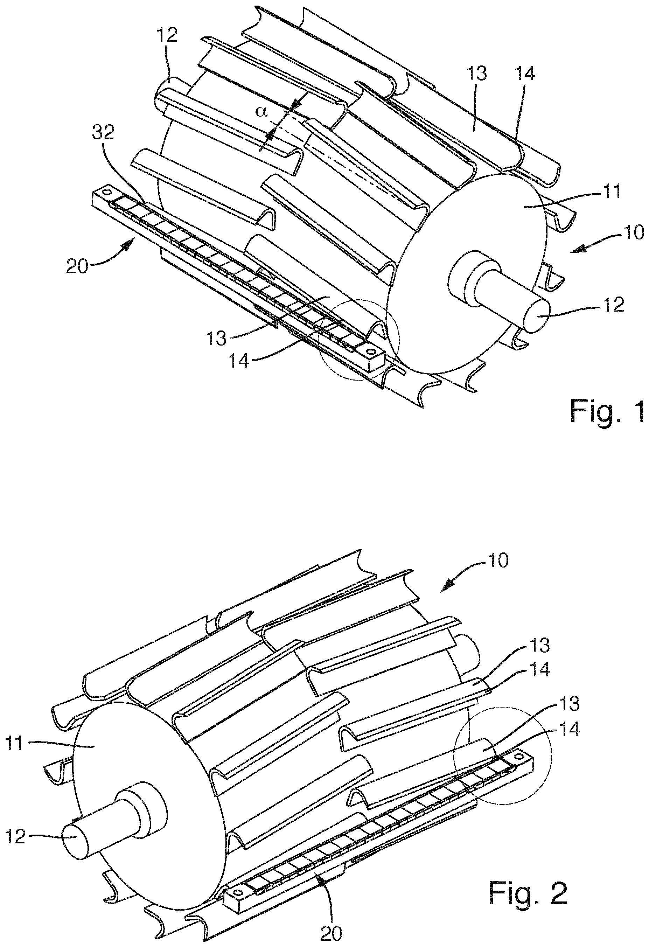

Figur 1 zeigt eine Häckseltrommel 10, welche einen walzenförmigen Schneidkörper 11 aufweist. Auf dem Außenumfang des Schneidkörpers 11 sind Messerleisten 13 angeordnet. Die Messerleisten 13 weisen jeweils eine Schneide 14 auf. Die Messerleisten 13 sind auf dem Außenumfang des Schneidkörpers 11 so aufgebracht, dass sie in einem Schneidwinkel α angestellt sind. Der Schneidwinkel α wird dabei zwischen der Schneide 14 und einer parallel zur Rotationsachse der Häckseltrommel 10 verlaufenden Axiallinie gebildet.

Wie die Zeichnung erkennen lässt, sind zwei in Umfangsrichtung der Häckseltrommel 10 verlaufende Reihen von Messerleisten 13 vorgesehen. Dabei ist die Anordnung der Messerleisten 13 so getroffen, dass die Messerleisten 13 der einen Reihe von Messerleisten 13 V-förmig zu der anderen Reihe von Messerleisten 13 angestellt ist.

Es sind jeweils dabei gleiche Schneidwinkel α vorgesehen. Der Schneidkörper 11 weist an seinen beiden längsseitigen Enden Lagerwellen 12 auf. Mit diesen kann er drehbar an einem Schneidaggregat gehalten werden.

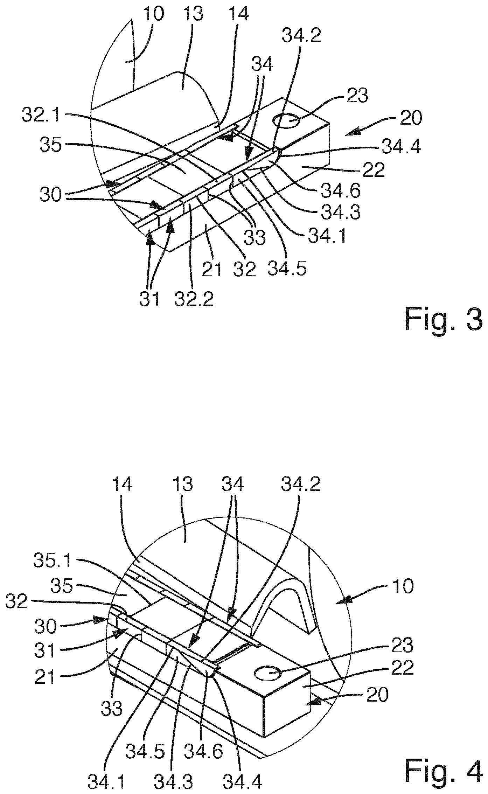

Die Figuren 1 und 2 lassen weiter erkennen, dass eine Gegenschneide 20 vorgesehen ist. Die Gegenschneide 20 bildet eine Schneidkante 32. Die Häckseltrommel 10 ist der Gegenschneide 20 so zugeordnet, dass bei einer Drehbewegung der Häckseltrommel 10 die Messerleisten 13 mit ihren Schneiden 14 im dichten Abstand an der Schneidkante 32 vorbeigeführt werden können. Dies ist in den Figuren 3 und 4 näher veranschaulicht.

Die Figuren 3 und 4 zeigen Details, die den Figuren 1 und 2 entnommen sind. Wie diese Darstellungen erkennen lassen, weist die Gegenschneide 20 einen Träger 21 auf. Dieser Träger 21 wird von einem Stahlwerkstoff gebildet. Der Träger 21 weist an seinen beiden längsseitigen Enden Endstücke 22 auf. Die Endstücke 22 sind mit Befestigungsaufnahmen 23, beispielsweise Befestigungsbohrungen ausgerüstet mit den Befestigungsaufnahmen 23 kann die Gegenschneide 20 im Bereich des Schneidaggregats lösbar befestigt werden.

Wie Figur 3 erkennen lässt, besitzt die Gegenschneide 20 zwei Schneidbereiche 30. Die Schneidbereiche 30 sind an den gegenüberliegenden Längsseiten des Trägers 21 vorgesehen.

In jedem Schneidbereich 30 ist eine Reihe von Schneidelementen 31 vorgesehen. Die Schneidelemente 31 werden von Hartstoffelementen, beispielsweise Elementen aus Hartmetall oder Keramik gebildet. Die Schneidelemente 31 weisen im Wesentlichen eine quaderförmige Bauweise auf. Dabei sind die Schneidelemente 31 dem Träger 21 so zugeordnet, dass sie mit ihren Schmalseiten auf einer Aufstandsfläche des Trägers 21aufsitzen. Die Rückseite der Schneidelemente 31 ist gegenüber einer Stützfläche des Trägers 21 abgestützt. Im Bereich der Rückseiten und der Aufstandsfläche kann eine Lötverbindung vorgesehen sein. Denkbar ist auch die Verwendung einer anderen stoffschlüssigen Verbindung, beispielsweise einer Klebeverbindung.

Die der Aufstandsfläche gegenüberliegende Seite der Schneidelemente 31 bildet eine Schneidfläche 32.1. Die freistehende Kante dieser Schneidfläche 32.1 bildet jeweils eine Teil-Schneide. Die Teil-Schneide bildet entsprechend einen Übergang zwischen der Schneidfläche 32.1 und einer in Schneidrichtung daran anschließenden Freifläche 32.2. Die Schneidelemente 31 sind über Stoßstellen 33 abstandsfrei aneinandergereiht. Auf diese Weise ergibt sich eine durchgehende Schneidkante 32 im Schneidbereich 30. Wie die Zeichnungen erkennen lassen, sind entsprechend zwei Schneidkanten 32 an gegenüberliegenden Seiten des Trägers 21 in den beiden Schneidbereichen 30 vorgesehen.

Zwischen den beiden Reihen von Schneidelementen 31 ist die Oberseite des Trägers 21 mittels Panzerelementen 35 belegt. Die Panzerelemente 35 können ebenfalls aus Hartwerkstoff, beispielsweise Hartmetall oder Keramik bestehen. Sie sind mit der Oberseite des Trägers 21 stoffschlüssig verbunden, beispielsweise verklebt oder verlötet. Vorzugsweise sind die Panzerelemente 35 an ihren längsseitigen Enden 35.1 abstandsfrei aneinandergesetzt. Auf diese Weise sind auch die Stoßstellen zwischen den Panzerelementen 35 vor Auswaschungen geschützt.

Die Figuren 3 und 4 lassen weiter erkennen, dass am längsseitigen Ende der beiden Reihen von Schneidelementen 31 Einlaufelemente 34 vorgesehen sind. Die Einlaufelemente 34 bestehen ebenso wie die Schneidelement 31 aus einem Hartwerkstoff, insbesondere aus Hartmetall oder Keramikmaterial. Bei den Einlaufelementen 34 handelt es sich um Sinterbauteile, die in einem vorgelagerten Verfahrensschritt separat gefertigt und dann mit der Gegenschneide 20 verbunden, beispielsweise verklebt oder verlötet werden können.

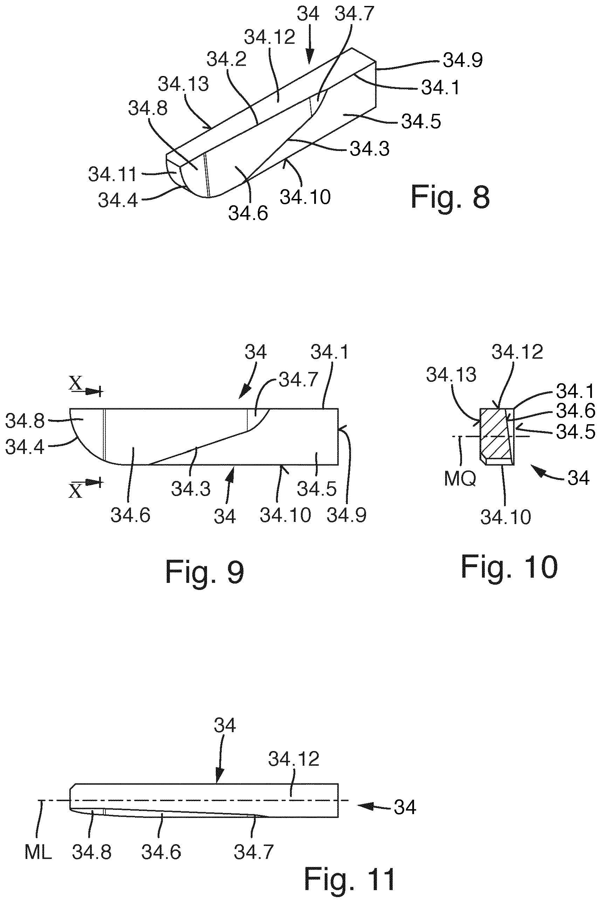

Die Gestaltung der Einlaufelemente 34 ist in den Figuren 8 bis 11 näher detailliert.

Wie diese Zeichnungen zeigen, können die Einlaufelemente 34 einen Schneidenabschnitt 34.1 aufweisen, wobei dieser Schneidenabschnitt 34.1 dann vorzugsweise in die Schneidkante 32 der Schneidelement 31 übergeht. Besonders bevorzugt steht dieser Schneidenabschnitt 34.1 in Flucht zu der Schneidkante 32.

Das Einlaufelement 34 weist weiterhin eine Einlauffase 34.6 auf. Die Einlauffase 34.6 kann als ebene Fläche oder als konkave Fläche ausgebildet sein. Denkbar sind auch weitere andere Geometrien, beispielsweise konvexe Einlauffasen oder Kombinationen der vorgenannten Geometrien. Besonders bevorzugt sind jedoch ebene oder konkave Einlauffasen 34.6 verwendet.

Das Einlaufelement 34 besitzt eine frontseitige Einlaufelement-Freifläche 34.5. Diese geht vorzugsweise absatzlos in die Freifläche 32.2 des anschließenden Schneidelements 31 über. wie dies die Figuren 3 und 4 zeigen

Oberseitig ist das Einlaufelement 34 mit einem Deckabschnitt 34.12 abgeschlossen. Dieser Deckabschnitt 34.12 geht vorzugsweise absatzlos in die Schneidfläche 32.1 des anschließenden Schneidelements 31 über.

Der Schneidenabschnitt 34.1 des Einlaufelements 34 kann bereichsweise einen Übergang zwischen dem Deckabschnitt 34.12 und der Einlaufelement-Freifläche 34.5 bilden.

Wie insbesondere Figur 8 erkennen lässt, weist das Einlaufelement 34 eine Einlauffase 34.6 auf. Diese Einlauffase 34.6 ist an gegenüberliegenden Seiten von einer Kante 34.2 und einem Übergangsabschnitt 34.3 begrenzt. Die Kante 34.2 bildet dabei einen Übergang zwischen der Einlauffase 34.6 und dem Deckabschnitt 34.12. Der Übergangsabschnitt 34.3 bildet einen Übergang zwischen der Einlauffase 34.6 und der Einlaufelement-Freifläche 34.5.

Die Einlauffase 34.6 ist sowohl im Winkel zu der Einlaufelement-Freifläche 34.5 als auch im Winkel zu dem Deckabschnitt 34.12 angeordnet. Dies ergibt sich insbesondere aus den Figuren 10 und 11. Diese Zeichnungen lassen erkennen, dass Die Einlauffase 34.6 sowohl gegenüber der in Längsrichtung des Einlaufelements 34 verlaufenden Mittellängsebene ML (siehe Figur 11) als auch zu der ebenfalls in Längsrichtung verlaufenden Mittelquerebene MQ (siehe Figur 10) geneigt angeordnet ist. Aufgrund dieser geneigten Anordnung steht die Einlauffase 34.6 derart geneigt dass sie gegenüber der Schneidkante 32 zurückversetzt angeordnet ist.

Die Einlaufelement-Freifläche 34.5 besitzt an ihrer dem anschließenden Schneidelement 31 zugewandten Seite eine ebene Stoßstelle 34.9. Mit dieser Stoßstelle 34.9 kann das Einlaufelement 34 abstandslos an das anschließende Schneidelement 31 angereiht werden.

Die Einlauffase 34.6 weist an ihren beiden längsseitigen Enden Überleitbereiche 34.7, 34.8 auf. Die Gestaltung dieser Überleitbereiche 34.7, 34.8 ergibt sich aus Figur 11. Wie diese Darstellung zeigt, können die Überleitbereiche 34.7, 34.8 als ebene Flächen ausgebildet sein, die sich im Winkel an die Einlauffase 34.6 anschließen. Denkbar ist es auch, eine bogenförmige Gestaltung an den Überleitbereichen 34.7, 34.8 vorzusehen. Auf diese Weise kann ein harmonischer Übergang zu den anschließenden Bereichen des Einlaufelements 34 geschaffen werden. Im vorliegenden Ausführungsbeispiel ist der der Stoßstelle 34.9 zugewandte Überleitbereich 34.7 als konkave Fläche ausgebildet. Der zweite Überleitbereich 34.8 ist in Form einer ebenen Fläche ausgebildet, die sich im Winkel an die flächenförmige Einlauffase 34.6 anschließt.

Gegenüberliegend dem Deckabschnitt 34.12 besitzt das Einlaufelement 34 einen Boden 34.10 und rückseitig eine Rückwand 34.13. Das Einlaufelement 34 ist mit dem Boden 34.10 und der Rückwand 34.13 unter Vermittlung einer stoffschlüssigen Verbindung an dem Träger 21 abgestützt. Die stoffschlüssige Verbindung hat einen niedrigeren Elastizitätsmodul als das Einlaufelement 34. Auf diese Weise bildet die stoffschlüssige Verbindung eine Pufferschicht, über die stoßartige Belastungen in gewissen Grenzen abgefangen werden können. Darüber hinaus dient die vermittelnde stoffschlüssige Verbindung dazu, das Einlaufelement 34 im Bereich des Bodens 34.10 und der Rückwand 34.13 flächig abzustützen, sodass die Bruchgefahr für das Einlaufelement deutlich reduziert wird.

An dem der Stoßstelle 34.9 gegenüberliegendem freien Ende kann das Einlaufelement 34 ebenfalls mit einem Anlagebereich 34.11 ausgerüstet sein. Im vorliegenden Ausführungsbeispiel ist der Anlagebereich 34.11 als konvexer Wandabschnitt gebildet. Mit diesem Wandabschnitt kann das Einlaufelement 34 ebenfalls stoffschlüssig mit dem Träger 21 verbunden sein. Der Anlagebereich 34.11 geht über einen Verbindungsabschnitt 34.4 in den Überleitbereich 34.8 über. Der Verbindungsabschnitt 34.4 ist als bogenförmige Kante ausgeführt.

Wie dies vorstehend erläutert wurde, besteht das Einlaufelement 34 vorzugsweise aus Hartmetall. Es wird erfindungsgemäß so ausgebildet, dass die Einlauffase 34.6 bereits im Sinterverfahren anprofiliert wurde. Auf diese Weise entfällt ein aufwendiger Schleifvorgang des harten Werkstoffs. Bei der Fertigung des Einlaufelements 34 wird dementsprechend zunächst ein Grünling mit angepresster Einlauffase 34.6 gefertigt und dieser dann anschließend im Sinterofen zum fertigen Hartmetall-Bauteil unter Temperatureinwirkung verbacken.

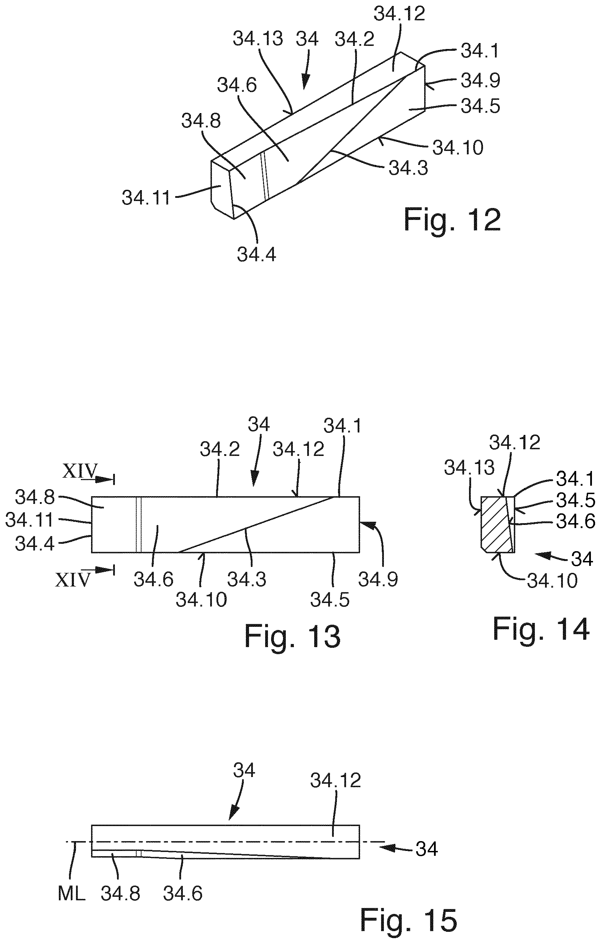

In den Figuren 12 bis 15 ist eine alternative Ausgestaltungsvariante eines Einlaufelements 34 gezeigt. Dieses Einlaufelement 34 ist im Wesentlichen ähnlich aufgebaut, wie das Einlaufelement 34 gemäß den Figuren 8 bis 11, weswegen auf die vorstehenden Ausführungen zur Vermeidung von Wiederholungen Bezug genommen werden kann. Wie diese Darstellung erkennen lässt, unterscheidet sich das Einlaufelement 34 dadurch, dass der Anlagebereich 34.11 nicht konvex gewölbt, sondern geradlinig ausgebildet ist. Insbesondere kann es so sein, dass der Anlagebereich 34.11 parallel zu der Wand steht, die die Stoßstelle 34.9 bildet.

Ein weiterer Unterschied besteht darin, dass die Einlauffase 34.6 nur den Überleitbereich 34.8 aufweist. Auf der anderen Seite besitzt die Einlauffase keinen Überleitbereich. Vielmehr ist es hier so, dass sich die Einlauffase 34.6 deutlich weiter in Längsrichtung erstreckt, so dass der Schneidenabschnitt 34.1 kürzer ist als bei dem Ausführungsbeispiel nach den Figuren 8 bis 11. Weiterhin ist der Endabschnitt 34.4 nunmehr in Form einer vertikalen geradlinigen Kante ausgeführt die im Übergang zwischen dem Anlagebereich 34.11 und dem Überleitbereich 34.8 steht.

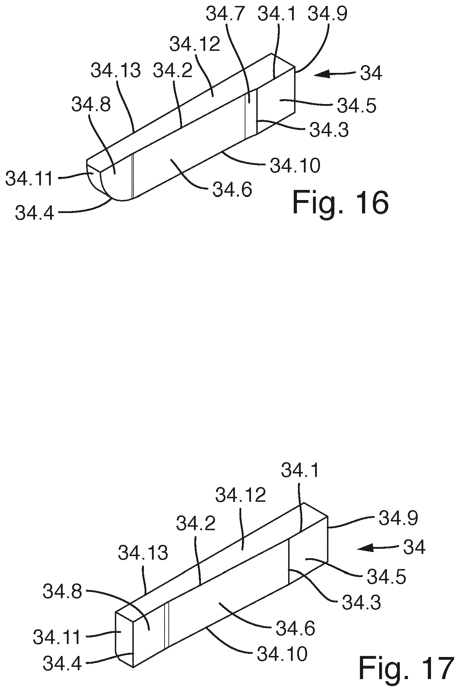

Die Figuren 16 und 17 zeigen weitere Alternativen für ein Einlaufelement 34. Auch in Bezug auf diese Ausführungsbeispiele soll auf die vorstehenden Ausführungen im wesentlichen Bezug genommen und nachstehend nur auf die Unterschiede eingegangen werden.

Bei der Variante gemäß Figur 16 ist die Einlauffase 34.6 so ausgebildet, dass sie nur im Winkel zu der Mittellängsebene ML steht. Eine Anstellung zur Mittelquerebene MQ ist hier nicht vorgesehen. Dementsprechend ist die Einlauffase 34.6 auch nur in einer Ebene geneigt. Hierdurch ergibt sich ein senkrecht verlaufender Übergangsabschnitt 34.3. Im Gegensatz dazu sind bei den vorbeschriebenen Einlaufelementen 34.6 schräg verlaufende Übergangsabschnitte 34.3 vorgesehen.

Bei dem Einlaufelement 34 gemäß Figur 16 sind wieder zwei Überleitbereiche 34.7, 34.8 vorgesehen. Hingegen weist das Einlaufelement 34 gemäß Figur 17 nur einen Überleitbereich 34.8 auf. Weiterhin ist bei dem Einlaufelement 34 gemäß Figur 16 ähnlich wie bei Figur 8 ein konvexer Anlagebereich 34.11 vorgesehen, wohingegen die Variante gemäß Figur 17, wie Figur 12 einen flächigen Anlagebereich 34.11 vorsieht.

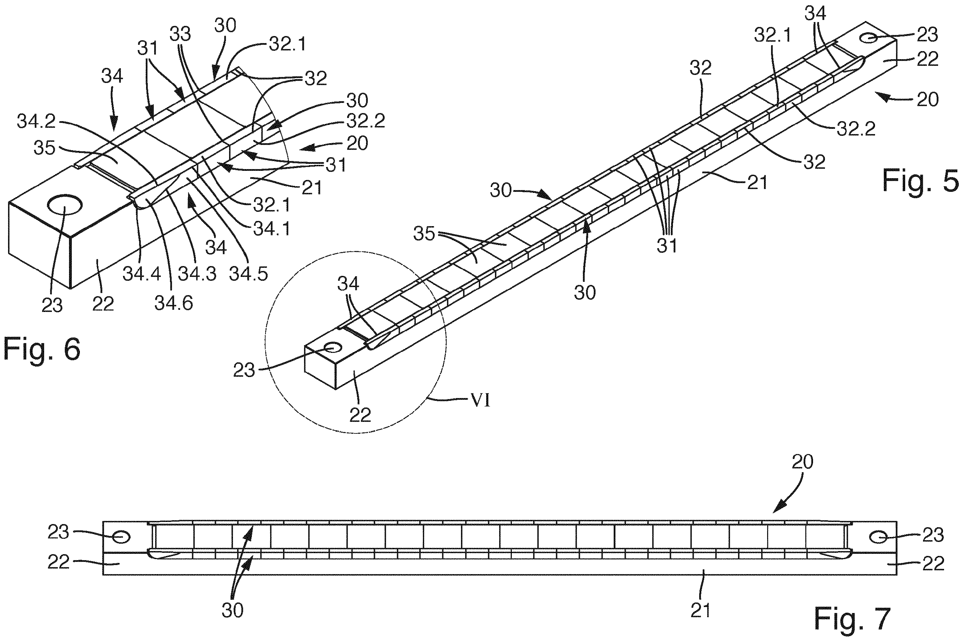

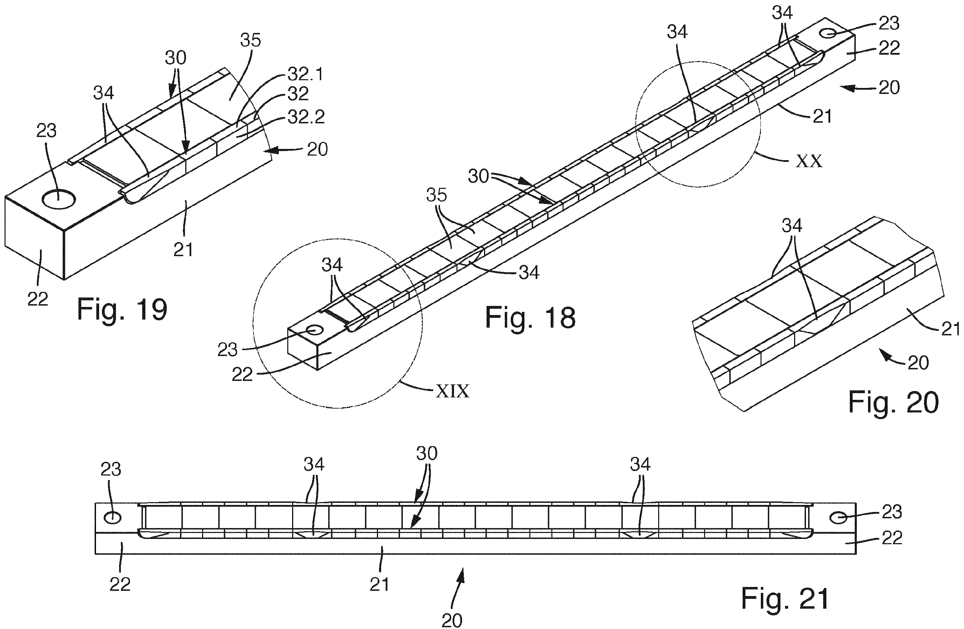

In den Figuren 19 bis 21 ist eine weitere Ausführungsform einer Gegenschneide 20 beschrieben. Diese Gegenschneide 20 weist prinzipiell den gleichen Gesamtaufbau auf, wie die Gegenschneide 20 gemäß den Figuren 5 bis 7. Insofern soll nur auf die Unterschiede eingegangen werden. Auch bei dieser Gegenschneide 20 gemäß den Figuren 18 bis 21 ist wieder ein Träger 21 mit Endstücken 22 und Befestigungsaufnahmen 23 vorgesehen. Es sind wieder zwei Schneidbereiche 30 von aneinandergereihten Schneideelementen 31 gebildet.

An der Gegenschneide 20 gemäß den Figuren 5 bis 7 sind jeweils an den längsseitigen Enden der Schneidkanten 32 Einlaufelemente 34 vorgesehen. Dies ist auch bei der Gegenschneide 20 gemäß den Figuren 18 bis 21 der Fall. Zusätzlich weist jedoch die Gegenschneide gemäß den Figuren 18 bis 21 auch Einlaufelemente 34 auf, die in die Reihen von Schneidelementen 31 eingereiht sind. Pro Schneidkante 32 sind jeweils zwei zusätzliche Einlaufelemente der 34 vorgesehen.

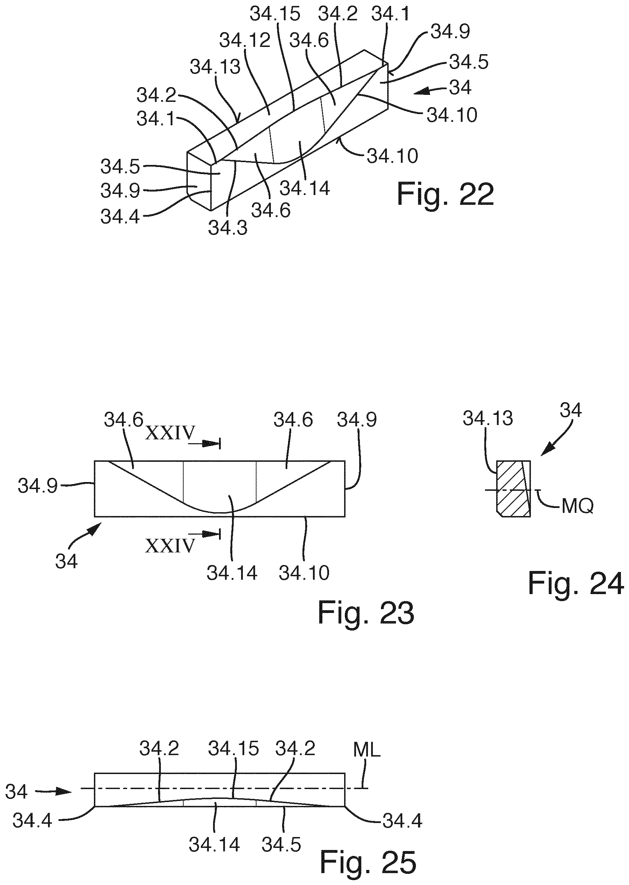

Zur Beschreibung dieser eingereihten Einlaufelemente 34 wird auf die Figuren 22 bis 25 Bezug genommen. Wie diese Darstellungen zeigen, weisen die Einlaufelemente 34 an gegenüberliegenden Seiten Schneidenabschnitte 34.1 auf. Die Schneidenabschnitte 34.1 bilden einen Übergang zwischen einer frontseitigen Einlaufelement-Freifläche 34.5 und einem Deckabschnitt 34.12.

Anschließend an die beiden Schneidenabschnitte 34.1 sind Einlauffasen 34.6 vorgesehen. Die Einlauffasen 34.6 sind an gegenüberliegenden Seiten von einer Kante 34.2 und einem Übergangsabschnitt 34.3 begrenzt. Insofern stimmt die Ausgestaltung des Einlaufelements 34 überein mit der vorgeschriebenen Gestaltung der Einlaufelemente 34 und sämtliche Varianten, die vorstehend beschrieben wurden können auch in Bezug auf das Einlaufelement 34 gemäß den Figuren 22 bis 25 ausgeführt sein.

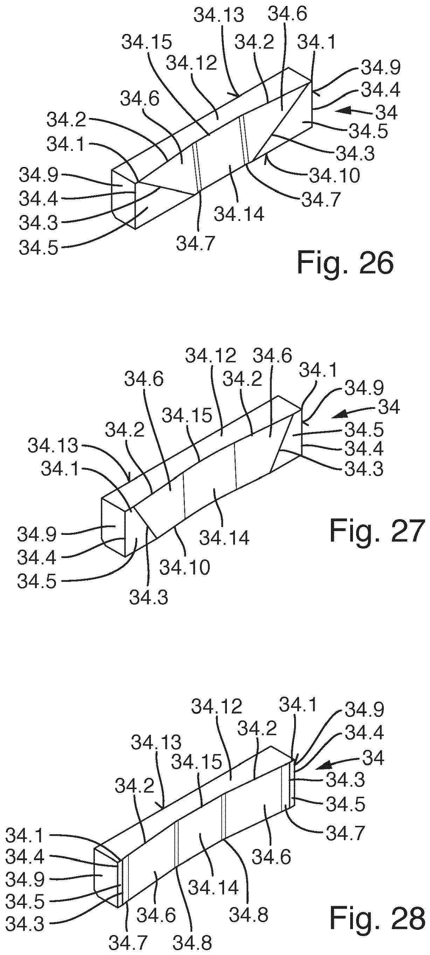

Im Unterschied zu den vorbeschriebenen Ausführungsbeispielen besitzt das Einlaufelement zwei Einlauffasen 34.6, die gegeneinander geneigt angeordnet sind. Die Einlauffasen 34.6 sind über einen Verbindungsabschnitt 34.14 miteinander verbunden. Der Verbindungsabschnitt 34.14 kann, wie Figur 22 zeigt, als konkave Wölbung ausgeführt sein. Denkbar ist jedoch auch eine flächige ebene Ausgestaltung des Verbindungsabschnitts 34.14, wie Figur 26 zeigt. Beide Verbindungsabschnitte 34.14 sind mittig über die Verbindungskante 34.15 verbunden. Die Verbindungskante 34.15 schafft einen Übergang von dem Deckabschnitt 34.12 in den Verbindungsabschnitt 34.14. Die beiden Einlauffasen 34.6 können ebenso, wie dies vorstehend beschrieben wurde mit einem oder zwei Überleitbereichen 34.7, 34.8 an den längsseitigen Enden versehen sein.

Wie Figur 18 veranschaulicht, werden diese Einlaufelemente 34 so in die Reihe von Schneidelementen 31 integriert, dass zu beiden Seiten jeweils ein Schneidelement 31 unmittelbar anschließt. Die Schneidenabschnitte 34.1 gehen dann beide in die anschließende Schneidkante 32 über. Die Einlaufelement Freifläche 34.5 und der Deckabschnitt 34.12 können jeweils in die anschließenden Freiflächen 32.2 bzw. die anschließenden Schneidflächen 32.1 der benachbarten Schneidelemente 31 absatzlos übergehen.

Die Gegenschneiden 20 in der Bauweise gemäß den Figuren 19 bis 21 können bei Häckseltrommeln 10 eingesetzt werden, bei denen zusätzlich zu den seitlichen Reihen von Messerleisten 13, wie sie in den Figuren 1 und 2 gezeigt sind, zwischen diesen beiden Messerleisten 13 noch weitere Umfangsreihen von Messerleisten vorgesehen sind. Auch diese Messerleisten 13 sind dann wieder geneigt angeordnet (Winkel a).

Bei dem Einlaufelement 34 gemäß Figur 26 ist im Unterschied zu dem Einlaufelement 34 gemäß Figur 25 im Übergangsbereich zwischen dem Verbindungsabschnitt 34.14 und den Einlauffasen 34.6 jeweils ein Überleitbereich 34.7 angeordnet.

Das Einlaufelement 34 gemäß Figur 27 zeigt im Unterschied zu dem Einlaufelement 34 gemäß Figur 26 keinen Überleitbereich 34.7. Weiterhin ist die Einlauffase 34.6 verändert gestaltet, wobei sich die Einlauffase 34.6 über einen weiteren Bereich der Einlaufelement Freifläche 34.5 erstreckt und entsprechend der Übergangsabschnitt 34.6 steiler angestellt ist.

Bei dem Einlaufelement 34 gemäß Figur 28 sind zwei Überleitbereiche 34.7, 34.8 vorgesehen. Die Einlauffasen 34.6 sind jeweils nur in Richtung der Mittellängsebene ML und nicht in Richtung der Mittelquerebene MQ geneigt angeordnet.

## Patentansprüche

1. Gegenschneide (20), für einen Feldhäcksler oder eine sonstige land- oder forstwirtschaftliche Maschine, mit einem Träger (21) der einen Schneidbereich (30) aufweist, wobei im Schneidbereich (30) eine Vielzahl von Schneidelementen (31) aneinandergereiht sind, wobei die Schneidelemente (31) eine Teil-Schneide aufweisen und zumindest ein Teil der Teil-Schneiden eine Schneidkante (32) bilden, die ausgebildet ist, um mit einer Messerleiste einen Schneideingriff für das zu zerkleinernde Material zu bilden, wobei die Schneidkante (32) einen Übergang zwischen einer von den Schneidelementen (31) gebildeten und sich quer zur Schneidrichtung erstreckenden Schneidfläche (32.1) und einer sich im Wesentlichen in Schneidrichtung erstreckenden, an die Schneidkante (32) mittelbar oder unmittelbar anschließenden Freifläche (32.2) bildet,
**dadurch gekennzeichnet,**
**dass** an oder in der Reihe von Schneidelementen (31) ein Einlaufelement (34) vorgesehen ist, das als Sinterteil, bestehend aus Hartwerkstoff mit im Sinterverfahren anprofilierter Einlauffase (34.6) ausgebildet ist, wobei die Einlauffase (34.6) in die Schneidkante (32) mittelbar oder unmittelbar übergeleitet ist, und wobei die Einlauffase (34.6) derart geneigt zu der Schneidkante (32) angeordnet ist, dass sie gegenüber der Freifläche (32.2) und in Richtung der Schneidfläche (32.1) zurückversetzt angeordnet ist.

2. Gegenschneide (20) nach Anspruch 1, **dadurch gekennzeichnet, dass** das Einlaufelement (34) einen Schneidenabschnitt (34.1) mit einer Einlaufelement-Schneidkante aufweist, und wobei diese Einlaufelement-Schneidkante in die von den Schneidelementen (31) gebildete Schneidkante (32) übergeht, insbesondere in Flucht zu dieser Schneidkante (32) steht.

3. Gegenschneide (20) nach Anspruch 1 oder 2, **dadurch gekennzeichnet, dass** das Einlaufelement (34) einen Deckabschnitt (34.12) aufweist, welcher bündig in die von dem benachbarten Schneidelement (31) gebildete Schneidfläche (32.1) übergeht.

4. Gegenschneide (20) nach einem der Ansprüche 1 bis 3, **dadurch gekennzeichnet, dass** das Einlaufelement (34) eine frontseitige Einlaufelement-Freifläche (34.5) aufweist, die bündig in die von dem benachbarten Schneidelement (31) gebildete Freifläche (32.2) übergeht.

5. Gegenschneide (20) nach einem der Ansprüche 1 bis 4, **dadurch gekennzeichnet, dass** die Einlauffase (34.6) des Einlaufelements (34) an gegenüberliegenden Seiten von einer Kante (34.2) und einem Übergangsabschnitt (34.3) begrenzt ist, wobei die Kante (34.2) in einen oberseitigen Deckabschnitt (34.12) übergeht und der Übergangsabschnitt (34.3) die Einlauffase (34.6) in die Einlaufelement-Freifläche (34.5) überleitet.

6. Gegenschneide (20) nach einem der Ansprüche 1 bis 5, **dadurch gekennzeichnet, dass** die Einlauffase (34.6) einen flächenförmigen Abschnitt aufweist, der sich im Wesentlichen in Richtung der Schneidkante (32) erstreckt, und dass dieser flächenförmige Abschnitt an seinem einen längsseitigen Ende in einem ersten Überleitbereich ausläuft, der sich an den flächenförmigen Abschnitt eben und im Winkel und/oder bogenförmig anschließt und über den die Einlauffase (34.6) in den Bereich des Deckabschnitts (34.12) und/oder der Einlaufelement-Freifläche (34.5) ausläuft.

7. Gegenschneide (20) nach Anspruch 6, **dadurch gekennzeichnet, dass** das Einlaufelement (34) an seinem einen längsseitigen Ende, im Übergangsbereich zu dem anschließenden Schneidelement (31) eine Stoßstelle (34.9) aufweist und an dem gegenüberliegenden längsseitigen Ende einen Endabschnitt (34.4) aufweist, dass im Anschluss an die Einlauffase (34.6) ein zweiter Überleitbereich (34.8) im Bereich des Endabschnitts (34.4) vorgesehen ist, der sich eben und im Winkel und/oder bogenförmig an die Einlauffase (34.6) anschließt.

8. Gegenschneide (20) nach einem der Ansprüche 1 bis 7, **dadurch gekennzeichnet, dass** das Einlaufelement (34) an seiner Oberseite von einem Deckabschnitt (34.12) und seiner Unterseite von einem Boden (34.10) begrenzt ist, wobei der Deckabschnitt (34.12) vorzugsweise parallel zu dem Boden (34.10) steht, dass das Einlaufelement (34) frontseitig von der Einlaufelement-Freifläche (34.5) begrenzt ist und dass die Einlaufelement-Freifläche (34.5) an den Deckabschnitt (34.12) und/oder den Boden (34.10) anschließt.

9. Gegenschneide (20) nach einem der Ansprüche 1 bis 8, **dadurch gekennzeichnet, dass** ein Einlaufelement (34) an einem längsseitigen Ende der Reihe von Schneidelementen (31) oder jeweils ein Einlaufelement (34) an den beiden längsseitigen Enden der Reihe von Schneidelementen (31) angeordnet ist, und/oder dass ein Einlaufelement (34) in die Reihe von Schneidelementen (31) zwischen zwei benachbarten Schneidelementen (31) integriert ist.

10. Gegenschneide (20) nach einem der Ansprüche 1 bis 8, **dadurch gekennzeichnet, dass** das Einlaufelement (34) zwei Einlauffasen (34.6) aufweist, die zueinander und zu der Schneidkante (32) im Winkel stehen, und dass die Einlauffasen (34.6) unmittelbar oder über einen Verbindungsabschnitt (34.14) ineinander übergehen.

11. Gegenschneide (20) nach Anspruch 10, **dadurch gekennzeichnet, dass** der Verbindungsabschnitt (34.14) mit einer Verbindungskante (34.15) im Bereich des Deckabschnitts (34.12) abschließt, wobei die Verbindungskante (34.15) einen Übergang zwischen dem Verbindungsabschnitt (34.14) und dem Deckabschnitt (34.12) bildet.

12. Gegenschneide (20) nach Anspruch 10 oder 11, **dadurch gekennzeichnet, dass** der Verbindungsabschnitt (34.14) einen ebenen Flächenabschnitt oder einen konkav gewölbten Flächenabschnitt zwischen den beiden Einlauffasen (34.6) aufweist.

13. Gegenschneide (20) nach einem der Ansprüche 1 bis 12, **dadurch gekennzeichnet, dass** das Einlaufelement (34) eine sich in Richtung der Schneidkante (32) erstreckende Mittellängsebene (ML) und eine senkrecht dazu stehende, sich ebenfalls in Richtung der Schneidkante (32) erstreckende Mittelquerebene (MQ) aufweist, dass die Einlauffase (34.6) oder die Einlauffasen (34.6) sowohl zu der Mittellängsebene (ML) als auch zu der Mittelquerebene (MQ) im Winkel stehen oder dass die Einlauffase (34.6) oder die Einlauffasen (34.6) zu der Mittellängsebene (ML) im Winkel steht.

14. Gegenschneide (20) nach einem der Ansprüche 1 bis 13, **dadurch gekennzeichnet, dass** der Träger (21) auf gegenüberliegenden Seiten Reihen von Schneidelementen (31) aufweist, die jeweils eine Schneidkante (32) bilden und dass jede der Reihen von Schneidelementen (31) wenigstens ein Einlaufelement (34) aufweist.

15. Gegenschneide (20) nach einem der Ansprüche 1 bis 14, **dadurch gekennzeichnet, dass** sich an die Reihe von Schneidelementen (31) im Bereich der Oberseite des Trägers (21) eine Reihe von Panzerelementen (35) anschließt, die vorzugsweise von plattenförmigen Elementen aus Hartstoff, insbesondere Hartmetall gebildet sind.

## Claims

1. A shear bar (20), for a forage harvester or another agricultural or silvicultural machine, having a carrier (21) that comprises a cutting region (30); a plurality of cutting elements (31) being set alongside one another in the cutting region (30); the cutting elements (31) comprising a partial edge and at least some of the partial edges forming a cutting edge (32) that is embodied to form, with a knife bar, a cutting engagement for the material to be shredded; the cutting edge (32) forming a transition between a cutting surface (32.1) that is constituted by the cutting elements (31) and extends transversely to the cutting direction, and an exposed surface (32.2) that extends substantially in a cutting direction and indirectly or directly adjoins the cutting edge (32),
**characterized in**
**that** an infeed element (34), which is embodied as a sintered part made of hard material having an infeed bevel (34.6) profiled on in the sintering process, is provided on or in the row of cutting elements (31); the infeed bevel (34.6) being carried over indirectly or directly into the cutting edge (32); and the infeed bevel (34.6) being arranged at a tilt with respect to the cutting edge (32) in such a way that it is arranged with a setback with respect to the exposed surface (32.2) and toward the cutting surface (32.1).

2. The shear bar (20) according to Claim 1, wherein the infeed element (34) comprises an edge portion (34.1) having an infeed-element cutting edge, said infeed-element cutting edge transitioning into the cutting edge (32) constituted by the cutting elements (31), in particular being in alignment with that cutting edge (32).

3. The shear bar (20) according to Claim 1 or 2, wherein the infeed element (34) comprises a cover portion (34.12) that transitions flush into the cutting surface (32.1) constituted by the adjacent cutting element (31).

4. The shear bar (20) according to one of Claims 1 to 3, wherein the infeed element (34) comprises a front-side exposed infeed-element surface (34.5) that transitions flush into the exposed surface (32.2) constituted by the adjacent cutting element (31).

5. The shear bar (20) according to one of Claims 1 to 4, wherein the infeed bevel (34.6) of the infeed element (34) is delimited on oppositely located sides by an edge (34.2) and by a transition region (34.3), the edge (34.2) transitioning into an upper-side cover portion (34.12) and the transition portion (34.3) carrying the infeed bevel (34.6) over into the exposed infeed-element surface (34.5).

6. The shear bar (20) according to one of Claims 1 to 5, wherein the infeed bevel (34.6) comprises a surface-shaped portion that extends substantially in the direction of the cutting edge (32); and that surface-shaped portion terminates at its one longitudinal-side end in a first carryover region which adjoins the surface-shaped portion in flat fashion and at an angle and/or in a curve shape, and by way of which the infeed bevel (34.6) terminates in the region of the cover portion (34.12) and/or of the exposed infeed-element surface (34.5).

7. The shear bar (20) according to Claim 6, wherein the infeed element (34) comprises an abutment face (34.9) at its one longitudinal-side end in the transition region to the adjoining cutting element (31), and comprises an end portion (34.4) at the oppositely located longitudinal-side end; and a second carryover region (34.8), which adjoins the infeed bevel (34.6) in flat fashion and at an angle and/or in a curved shape, is provided in the region of the end portion (34.4) adjacently to the infeed bevel (34.6).

8. The shear bar (20) according to one of Claims 1 to 7, wherein the infeed element (34) is delimited on its upper side by a cover portion (34.12) and on its lower side by a bottom (34.10), the cover portion (34.12) preferably being parallel to the bottom (34.10); the infeed element (34) is delimited at the front by the exposed infeed-element surface (34.5); and the exposed infeed-element surface (34.5) adjoins the cover portion (34.12) and/or the bottom (34.10).

9. The shear bar (20) according to one of Claims 1 to 8, wherein an infeed element (34) is provided at one longitudinal-side end of the row of cutting elements (31), or an infeed element (34) is respectively arranged at the two longitudinal-side ends of the row of cutting elements (31); and/or an infeed element (34) is integrated into the row of cutting elements (31) between two adjacent cutting elements (31).

10. The shear bar (20) according to one of Claims 1 to 8, wherein the infeed element (34) comprises two infeed bevels (34.6) that are at an angle to one another and to the cutting edge (32); and the infeed bevels (34.6) transition into one another directly or via a joining portion (34.14).

11. The shear bar (20) according to Claim 10, wherein the joining portion (34.14) terminates with a joining edge (34.15) in the region of the cover portion (34.12), the joining edge (34.15) constituting a transition between the joining portion (34.14) and the cover portion (34.12).

12. The shear bar (20) according to Claim 10 or 11, wherein the joining portion (34.14) comprises a flat surface portion or a concavely curved surface portion between the two infeed bevels (34.6).

13. The shear bar (20) according to one of Claims 1 to 12, wherein the infeed element (34) comprises a longitudinal center plane (ML) that extends in the direction of the cutting edge (32) and of a transverse center plane (MQ) perpendicular thereto and that also extends in the direction of the cutting edge (32); the infeed bevel or bevels (34.6) are at an angle both to the longitudinal center plane (ML) and to the transverse center plane (MQ); or the infeed bevel or bevels (34.6) are at an angle to the longitudinal center plane (ML).

14. The shear bar (20) according to one of Claims 1 to 13, wherein the carrier (21) comprises, on oppositely located sides, rows of cutting elements (31) that each form a cutting edge (32); and each of the rows of cutting elements (31) comprises at least one infeed element (34).

15. The shear bar (20) according to one of Claims 1 to 14, wherein the row of cutting elements (31) is adjoined in the region of the upper side of the carrier (21) by a row of armor elements (35) that are preferably constituted by plate-shaped elements made of hard material, in particular metal carbide.

## Revendications

1. Contre-couteau (20) pour une ensileuse ou une autre machine agricole ou forestière, avec un support (21) qui présente une zone de coupe (30), une pluralité d'éléments de coupe (31) étant alignés dans la zone de coupe (30), les éléments de coupe (31) présentant un tranchant partiel et au moins une partie des tranchants partiels formant une arête de coupe (32), qui est conçu pour former avec une barre de coupe un engagement de coupe pour le matériau à broyer, l'arête de coupe (32) formant une transition entre une surface de coupe (32.1) et une surface de dégagement (32.2) s'étendant essentiellement dans la direction de coupe et se raccordant directement ou indirectement à l'arête de coupe (32),
**caractérisé en ce que**
**en ce qu'**il est prévu sur ou dans la rangée d'éléments de coupe (31) un élément d'entrée (34) qui est réalisé sous forme de pièce frittée, constituée d'un matériau dur avec un chanfrein d'entrée (34.6) profilé par le procédé de frittage, le chanfrein d'entrée (34. 6) est transmis directement ou indirectement dans l'arête de coupe (32), et le chanfrein d'entrée (34.6) étant disposé de manière inclinée par rapport à l'arête de coupe (32) de telle sorte qu'il est disposé en retrait par rapport à la surface de dégagement (32.2) et en direction de la surface de coupe (32.1).

2. Contre-couteau (20) selon la revendication 1, **caractérisée en ce que** l'élément d'entrée (34) présente une portion de coupe (34.1) avec une arête de coupe d'élément d'entrée, et où cette arête de coupe d'élément d'entrée se confond avec l'arête de coupe (32) formée par les éléments de coupe (31), en particulier est alignée avec cette arête de coupe (32).

3. Contre-couteau (20) selon les revendications 1 ou 2, **caractérisée en ce que** l'élément d'entrée (34) présente une section de couverture (34.12) qui se prolonge à fleur dans la surface de coupe (32.1) formée par l'élément de coupe (31) adjacent.

4. Contre-couteau (20) selon l'une des revendications 1 à 3, **caractérisée en ce que** l'élément d'entrée (34) présente une surface de dépouille d'élément d'entrée (34.5) côté frontal, qui se prolonge à fleur dans la surface de dégagement (32.2) formée par l'élément de coupe (31) voisin.

5. Contre-couteau (20) selon l'une des revendications 1 à 4, **caractérisée en ce que** le chanfrein d'entrée (34.6) de l'élément d'entrée (34) est délimité sur des côtés opposés par une arête (34.2) et une section de transition (34.3), l'arête (34.2) se transformant en une section de couverture supérieure (34.12) et la section de transition (34.3) faisant passer le chanfrein d'entrée (34.6) dans la surface de dépouille (34.5) de l'élément d'entrée.

6. Contre-couteau (20) selon l'une des revendications 1 à 5, **caractérisé en ce que** le chanfrein d'entrée (34. 6) présente une section en forme de surface qui s'étend essentiellement en direction de l'arête de coupe (32), et **en ce que** cette section en forme de surface se termine à l'une de ses extrémités longitudinales par une première zone de transition qui se raccorde à la section en forme de surface de manière plane et en formant un angle et/ou un arc et par laquelle le chanfrein d'entrée (34.6) se termine dans la zone de la section de couverture (34.12) et/ou de la surface de dépouille de l'élément d'entrée (34.5).

7. Contre-couteau (20) selon la revendication 6, **caractérisée en ce que** l'élément d'entrée (34) présente à l'une de ses extrémités longitudinales, dans la zone de transition vers l'élément de coupe (31) qui s'y raccorde, un point de jonction (34.9) et à l'extrémité longitudinale opposée une section d'extrémité (34. 4), **en ce que**, à la suite du chanfrein d'entrée (34.6), il est prévu une deuxième zone de transition (34.8) dans la zone du tronçon d'extrémité (34.4), qui se raccorde au chanfrein d'entrée (34.6) de manière plane et en formant un angle et/ou un arc.

8. Contre-couteau (20) selon l'une des revendications 1 à 7, **caractérisée en ce que** l'élément d'entrée (34) est délimité sur sa face supérieure par une section de couverture (34.12) et sur sa face inférieure par un fond (34.10), la section de couverture (34. 12) est de préférence parallèle au fond (34.10), que l'élément d'entrée (34) est délimité sur sa face avant par la surface de glissement (34.5) de l'élément d'entrée et que la surface de glissement (34.5) de l'élément d'entrée se raccorde à la section de couverture (34.12) et/ou au fond (34.10).

9. Contre-couteau (20) selon l'une des revendications 1 à 8, **caractérisée en ce qu'**un élément d'entrée (34) est disposé à une extrémité longitudinale de la rangée d'éléments de coupe (31) ou respectivement un élément d'entrée (34) est disposé aux deux extrémités longitudinales de la rangée d'éléments de coupe (31), et/ou **en ce qu'**un élément d'entrée (34) est intégré dans la rangée d'éléments de coupe (31) entre deux éléments de coupe (31) voisins.

10. Contre-couteau (20) selon l'une des revendications 1 à 8, **caractérisée en ce que** l'élément d'entrée (34) présente deux chanfreins d'entrée (34.6) qui forment un angle l'un par rapport à l'autre et par rapport à l'arête de coupe (32), et **en ce que** les chanfreins d'entrée (34.6) se rejoignent directement ou par l'intermédiaire d'une section de liaison (34.14).

11. Contre-couteau (20) selon la revendication 10, **caractérisée en ce que** la section de liaison (34.14) se termine par une arête de liaison (34.15) dans la zone de la section de couverture (34.12), l'arête de liaison (34.15) formant une transition entre la section de liaison (34.14) et la section de couverture (34.12).

12. Contre-couteau (20) selon les revendications 10 ou 11, **caractérisée en ce que** la section de liaison (34.14) présente une section de surface plane ou une section de surface bombée concave entre les deux chanfreins d'entrée (34.6).

13. Contre-couteau (20) selon l'une des revendications 1 à 12, **caractérisée en ce que** l'élément d'entrée (34) présente un plan longitudinal médian (ML) s'étendant en direction de l'arête de coupe (32) et un plan transversal médian (MQ) perpendiculaire à celui-ci et s'étendant également en direction de l'arête de coupe (32), **en ce que** le chanfrein d'entrée (34. 6) ou les chanfreins d'entrée (34.6) forment un angle aussi bien avec le plan longitudinal médian (ML) qu'avec le plan transversal médian (MQ) ou que le chanfrein d'entrée (34.6) ou les chanfreins d'entrée (34.6) forment un angle avec le plan longitudinal médian (ML).

14. Contre-couteau (20) selon l'une quelconque des revendications 1 à 13, **caractérisée en ce que** le support (21) comporte, sur des côtés opposés, des rangées d'éléments de coupe (31) formant chacune une arête de coupe (32) et **en ce que** chacune des rangées d'éléments de coupe (31) comporte au moins un élément d'entrée (34).

15. Contre-couteau (20) selon l'une des revendications 1 à 14, **caractérisé en ce que** la rangée d'éléments de coupe (31) est suivie, dans la zone de la face supérieure du support (21), d'une rangée d'éléments de blindage (35), qui sont de préférence formés par des éléments en forme de plaque en matériau dur, en particulier en métal dur.
